# EUROPÄISCHE PATENTSCHRIFT

(11) **EP 2 674 531 B1**
(45) Veröffentlichungstag und Bekanntmachung des Hinweises auf die Patenterteilung: **19.04.2017**
(21) Anmeldenummer: 13002835.0
(22) Anmeldetag: 01.06.2013
(51) Int. Cl.: E02B 8/08

(54) **Staustufe in einem fließenden Gewässer, mit einem künstlichen Auslaufgerinne und einem Fischpass**
Weir in a flowing body of water, with an artificial outlet area and a fish pass
Barrage dans une eau courante, avec une rigole d'écoulement artificielle et une passe à poissons

(30) Priorität: 11.06.2012 DE 102012011362
(43) Veröffentlichungstag der Anmeldung: 18.12.2013
(73) Patentinhaber: Universität Kassel, 34125 Kassel (DE)
(72) Erfinder: Hassinger, Reinhard, 34317 Habichtswald (DE)
(74) Vertreter: Patentanwälte Walther Hinz Bayer PartGmbB

(56) Entgegenhaltungen:
- WO-A1-91/06710
- WO-A1-98/58130
- DE-U1-202004 009 528
- US-A- 1 573 785
- US-A- 1 730 005

## Beschreibung

Die Erfindung betrifft eine Staustufe in einem fließenden Gewässer, mit einem künstlichen Auslaufgerinne, gemäß Anspruch 1.

Eine Staustufe kann beispielsweise ein Wehr sein, wobei sich strömungsseitig hinter dem Wehr (unterwasserseitig) ein sogenanntes Tosbecken befindet. Das Tosbecken selber ist gekennzeichnet durch eine Sohle aus unnatürlichem Untergrund, beispielsweise in Form von Beton, sowie seitlichen Wänden oder steilen Böschungen.

Darüber hinaus gibt es Staustufen, in denen ein Wasserkraftwerk angeordnet ist. Auch unterhalb der Saugschläuche der Turbinen, das heißt in Strömungsrichtung nach den Ausläufen der Saugschläuche, befindet sich eine künstliche Sohle. Der Raum im Bereich der künstlichen Sohle, der sich in Strömungsrichtung hinter der Staustufe befindet, wird allgemein im Folgenden als Auslaufgerinne bezeichnet.

Bei einer Staustufe ist zur Verbindung zwischen Unterwasser und Oberwasser bekannt, einen sogenannten Fischpass vorzusehen. Fischpässe sind in den unterschiedlichsten Ausführungsformen bekannt. Die Einstiege für solche Fischpässe befinden sich üblicherweise unmittelbar an der Staustufe, und zwar in der Nähe des Unterwasserspiegels des Unterwassers. Dort wo der Fischpasseinstieg angebracht ist, findet sich bei einer Staustufe mit einem Wehr oder einer Wasserkraftanlage der Raum der stärksten Strömung bzw. der stärksten Turbulenzen. Solche Fischpässe sind beispielsweise aus der US 1,730,005 A bekannt, wobei ein solcher Fischpass aus einer das Oberwasser mit dem Unterwasser verbindenden Rinne besteht, die oberhalb des Unterwasserspiegels verläuft, und die von dem Oberwasser mit Wasser versorgt wird. Ein gleichartig aufgebauter Fischpass ist aus der US 1,573,785 A bekannt. Auch hier ist eine Rinne vorgesehen, die außerhalb des Unterwasserspiegels das Unterwasser mit dem Oberwasser verbindet. Die DE 20 2004 009 528 U1 zeigt einen schräg verlaufenden Fischpass zwischen Oberwasser und Unterwasser, wobei auf dieser Fischpass mit Wasser aus dem Oberwasser versorgt wird. Die WO 98/58130 A1 zeigt eine Fischschleuse.

Die WO 91/06710 A1 wiederum zeigt einen Fischpassapparat, der zur Anpassung an unterschiedliche Höhen des Oberwassers verschwenkbar ausgebildet ist.

Nun gibt es sogenannte schwimmstarke und schwimmschwache Fische. Schwimmschwache Fische sind bodenorientierte Fische, während schwimmstarke Fische, z. B. die Salmoniden, die Orte mit starker Strömung nicht meiden. Der Ort der stärksten Strömung befindet sich beispielsweise im Tosbecken unmittelbar hinter dem Wehr bzw. im Bereich der Saugschläuche bei einem Wasserkraftwerk. Ein in diesem Bereich angeordneter Fischpasseinstieg wird insofern durch die Salmoniden gefunden. Zudem ist die Wassertiefe am Einstieg des Fischpasses groß, weiter auf Seite 3 der ursprünglich eingereichten Unterlagen sodass die Sohle des Fischpasses keinen Anschluss zur Sohle des Auslaufgerinnes hat, sondern weit über der Sohle in der Seitenwand endet. Weiteres Merkmal für die Nichtauffindbarkeit von Fischpässen ist für bestimmte bodenorientierte Fischarten, dass diese unnatürliche Sohlen meiden, wie sie im Tosbecken oder im Auslaufbereich von Wasserkraftwerken die Regel sind. Zusammengefasst bedeutet dies, dass der für schwimmstarke Fische günstig angeordnete Fischpasseinstieg von schwimmschwachen Fischen im Wesentlichen aus drei Gründen, nämlich dem Meiden unnatürlicher Sohlen, dem großen Höhenversatz und der starken Turbulenz nicht erreicht wird. Schwimmschwache Fische, also solche Fische, die eher bodenorientiert sind, haben damit im Wesentlichen keine Chance den Einstiegsbereich des Fischpasses bei einer derart turbulenten Strömung zu erreichen.

Eine gängige Lösung besteht darin, im Bereich des Fischpasseinstieges Geröll vorzuschütten. Diese Lösung ist allerdings aus hydraulischen und wasserbaulichen Gründen nicht akzeptabel, denn die aus Geröll ausgebildete Rampe wird unter den dort herrschenden hydraulischen Belastungen durch die Strömung nicht lange ihre ursprüngliche Form beibehalten. Das heißt, eine solche Rampe aus Geröll wird nicht lange ihre Funktion erfüllen können. Unterstrom von Wasserkraftwerken ist diese Art eines Sohlanschlusses ebenfalls nicht günstig, da sie in vielen Fällen den Ausstrom aus den Turbinen behindert, und deshalb zu einer Verringerung der Leistung des Wasserkraftwerkes führt. Vorgeschüttete Kegel aus großem Geröll haben überdies nicht die Eigenschaft einer fortgesetzten natürlichen Sohle. Zudem ist der Lockstrom, der aus dem Fischpass an der Spitze des Kegels austritt, am Fuß nicht zu spüren, sodass die lockorientierten Fische nicht durch eine Strömungsinformation den Schüttkegel hinauf zum Fischpass geleitet werden.

Die der Erfindung zugrunde liegende Aufgabe besteht demzufolge darin, einen Zugang zum Fischpasseinstieg bereitzustellen, den sowohl schwimmstarke als auch schwimmschwache Fische annehmen.

Zur Lösung der Aufgabe wird erfindungsgemäß bei einem Auslaufgerinne der eingangs genannten Art vorgeschlagen, dass der Einstieg des Fischpasses durch eine im Auslaufgerinne unterhalb des Unterwasserspiegels angeordnete Rampe mit der Sohle des künstlichen Auslaufgerinnes oder des Gewässers verbunden ist. Vorteilhaft ist hierbei der Einstieg des Fischpasses mit dem Unterwasser im Wesentlichen unmittelbar an der Staustufe verbunden, um schwimmstarken Fischen den Einstieg direkt in den Fischpass zu ermöglichen. Durch eine solche schräg von dem Einstieg des Fischpasses zur Sohle des Auslaufgerinnes verlaufende Rampe, die sich im Auslaufgerinne unterhalb des Unterwasserspiegels befindet, wird den schwimmschwachen Fischen die Möglichkeit gegeben, unter Umgehung der starken Strömung dennoch den Einstieg in den Fischpass zu erreichen. Ein weiterer wesentlicher Vorteil der Anordnung der Rampe in dem Auslaufgerinne unterhalb des Unterwasserspiegels besteht darin, dass kein zusätzliches Wasser benötigt wird, das vom Oberwasser abgezweigt werden muss, und das insofern für die Turbinen des Wasserkraftwerkes nicht zur Verfügung steht. Lediglich für den Fischpass wird Wasser benötigt, das vom Oberwasser abgezweigt wird.

Vorteilhafte Merkmale und Ausgestaltungen zu der Erfindung sind den Unteransprüchen zu entnehmen.

So sind die geometrischen Bedingungen des Auslaufgerinnes häufig dadurch gekennzeichnet, dass das Auslaufgerinne zumindest im Bereich des Einstiegs des Fischpasses eine im Wesentlichen vertikal ausgerichtete Seitenwandung aufweist. Die Wandung oder Seitenwandung kann beispielsweise eine Spundwand sein oder auch eine steile Böschung. An dieser Wandung oder Böschung kann die Rampe auskragend und frei ins Unterwasser ragend angeordnet sein.

Zur Halterung der Rampe ist nach einem weiteren Merkmal der Erfindung vorgesehen, an der Wandung des Auslaufgerinnes Konsolen vorzusehen, die die eigentliche Rampe als flaches längliches Gebilde aufnehmen. Das heißt, die Rampe ist frei auskragend durch die Konsolen aufgenommen.

Zur Erleichterung der Montage einer solchen Rampe kann hierbei die Rampe in mehrere plattenförmige Rampenelemente aufgeteilt sein, die einzeln hintereinander auf den Konsolen aufliegend die Rampe bilden.

Nach einem weiteren Merkmal der Erfindung weist die Rampe zur Wasserseite hin eine Bordwand auf. Diese Bordwand kann drei Aufgaben erfüllen, nämlich zum einen die Strömung beispielsweise im Tosbecken von dem Innenraum der Rampe fernzuhalten, zum anderen auf der Rampe aufliegendes Lockermaterial daran zu hindern, seitlich von der Rampe zu fallen und zum Dritten kann sie Fische, die sich durch längliche Strukturen leiten lassen (z. B. Aale) dazu animieren, der Rampe zu folgen. Es besteht allerdings nicht nur die Möglichkeit das Lockermaterial, beispielsweise Geröll, Sand oder Kies, in loser Form auf die schräge Rampe aufzubringen, sondern es besteht auch die Möglichkeit, den Rampenboden mit sogenannten Steinkammermatten zu belegen. Unter Steinkammermatten versteht man Matten, deren Stein- oder Kiesfüllung durch ein Netz gehalten wird.

Des Weiteren können auf dem Boden der Rampe Mittel vorgesehen sein, um Strömungsschatten zu erzeugen. Als solche Mittel zur Erzeugung von Strömungsschatten bieten sich auf dem Boden angeordnete Borstengruppen an. Borstenelemente haben die positiven Eigenschaften, die Turbulenzen zu dämpfen und den Fischen Strukturen anzubieten, die diese gerne z. B. als Schutz vor Räubern nutzen. Solche Borstengruppen können versetzt zueinander über die Länge der Rampe angeordnet sein, um den Fischen einen Zickzack-förmigen Aufstieg zu ermöglichen. Im unteren Bereich der Rampe, also im Bereich der Anbindung an die Sohle, die z. B. aus Beton hergestellt sein kann, ist vorgesehen, dass der Übergang von der Rampe zur Sohle mit Lockermaterial, also z. B. Kies, Sand oder gröberen Geröll ausgebildet ist. Um den schwimmschwachen Fischen den Einstieg auf die Rampe zu erleichtern, kann am unteren Ende eine Leiteinrichtung in Form einer Leiste oder Wandung vorgesehen sein, die in Verbindung mit der Spundwand dem Einstieg eine trichterförmige Gestalt gibt.

Im Übergang von der Rampe zum Einstieg des Fischpasses, der im Bereich des Unterwasserspiegels liegt, weist die Rampe, wenn sie mit einer Bordwand versehen ist, eine seitliche Öffnung auf.

Des Weiteren ist bekannt, dass Fische veranlasst werden, aufgrund einer Lockströmung in eine bestimmte Richtung zu wandern. Das heißt, dass die Fische entgegen der Strömungsrichtung in einem fließenden Gewässer aufsteigen.

Nun kann es sein, dass im Bereich der Rampe die Strömungsgeschwindigkeit aus welchen Gründen auch immer relativ gering ist, wie es beispielsweise der Fall sein kann, wenn die Rampe in einer Ablösezone mit geringen Strömungsgeschwindigkeiten liegt oder wenn die nächstgelegene Turbine abgeschaltet ist. Dann werden wegen der geringen Lockströmung die Fische ihren Weg auf der Rampe nicht finden. In einem solchen Fall kann nach einem besonderen Merkmal der Erfindung vorgesehen sein, im Bereich der Rampe Mittel zur Erzeugung einer Leitströmung anzuordnen. Diese Strömung bildet dann eine durchgehende Leitströmung für die Fische zum Aufstieg auf der Rampe. Das Mittel zur Erzeugung einer solchen Leitströmung kann beispielsweise ein Rohr umfassen, das mehrere Auslässe für das in dem Rohr geführte Wasser aufweist. Das im Rohr geführte Wasser wird vom Oberwasser abgezweigt, und sorgt dafür, dass auf der Rampe eine Strömung in Richtung auf das untere Ende, das heißt, die Sohle des Auslaufgerinnes zu erzeugt wird. Hierbei sind im Einzelnen mehrere, hintereinander angeordnete Auslässe in dem Rohr vorgesehen. Bevorzugt ist das Rohr über der Rampe angeordnet, wobei die Auslässe über der Rampe in dem Rohr angeordnet sind. Die Ausrichtung der Auslässe kann hierbei derart vorgenommen werden, dass die Strömung parallel zur Oberfläche der Rampe ausgerichtet ist.

Am unteren Ende weist das Rohr Mittel zur Erzeugung eines Lockstrahles auf, beispielsweise kann in diesem Zusammenhang das Rohr am unteren stirnseitigen Ende mit einer Düse versehen sein, die eine von der Wandung weggerichtete Strömung erzeugt, das heißt, dass die Strömung schräg in Richtung auf die Mitte des Auslaufgerinnes zugerichtet ist.
- Fig. 1: zeigt das Auslaufgerinne mit der Rampe in einer Seitenansicht im Längsschnitt;
- Fig. 2: zeigt eine Ansicht von oben auf das Auslaufgerinne;
- Fig. 3: zeigt einen Schnitt gemäß der Linie III-III aus Figur 1,

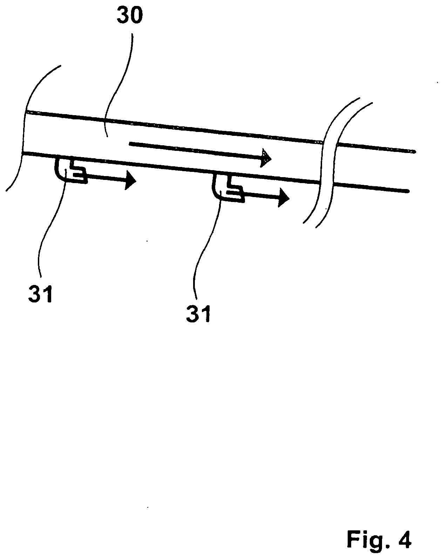

- Fig. 4: zeigt einen Ausschnitt des oberhalb der Rampe angeordneten Rohrs.

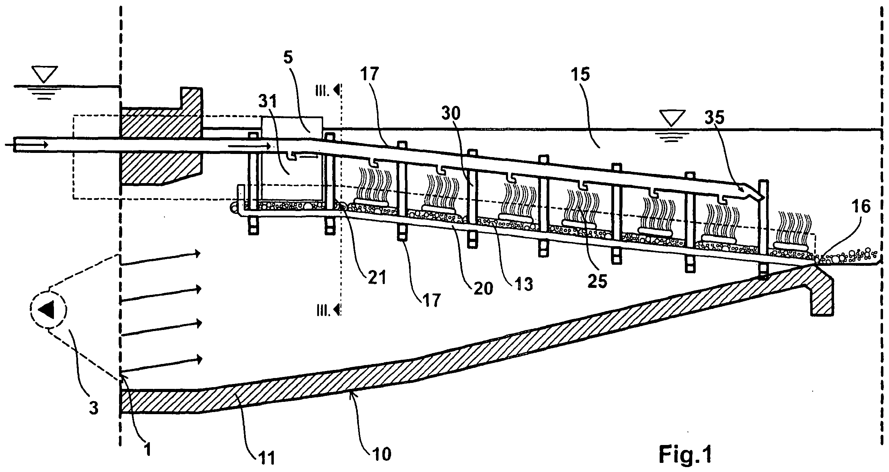

An die mit 1 bezeichnete Staustufe schließt sich das Auslaufgerinne 10 an. Im vorliegenden Fall wird vorausgesetzt, dass die Staustufe ein Wasserkraftwerk beinhaltet, wobei die Saugschläuche 3 die Ausläufe für die Turbinen bilden. Die Sohle 11 des Auslaufgerinnes ist hinter den Saugschläuchen vertieft ausgebildet, und steigt dann zum Ende des Auslaufgerinnes hin an, wie sich dies unmittelbar in Anschauung von Figur 1 ergibt. Der Grund für die Vertiefung der Sohle 11 hinter dem Turbinenauslauf besteht in der Bereitstellung einer ausreichend großen Fläche für den Ausstrom aus den Turbinen. Unmittelbar im Bereich der Staustufe 1 befindet sich der Fischpasseinstieg 5. Der Fischpasseinstieg ist im Bereich des Unterwasserspiegels in der Wandung 15, z. B. einer Spundwand angeordnet. Durch den Fischpass, der im Einzelnen nicht dargestellt ist, wird eine Verbindung zwischen dem Unterwasser und dem Oberwasser für die Fische bereitgestellt.

Gegenstand der Erfindung ist nun die Rampe 20, die sich vom Fischpasseinstieg 5 bis zum Auslauf 16 der Sohle 11 schräg verlaufend erstreckt. Zur Aufnahme der Rampe 20 weist die Wandung 15 einzelne Konsolen 17 auf, auf denen die mit 20 bezeichnete Rampe aufliegt. Die Rampe kann selbst aus einzelnen Rampenelementen bestehen, beispielsweise aus Beton, Kunststoff oder Stahl, die hintereinander angeordnet und miteinander verbunden auf den Konsolen 17 die Rampe 20 bilden. Auf der Rampe befindet sich Lockermaterial 13, z. B. in Form von Kies, wobei durch eine seitliche Bordwand 21 verhindert wird, dass der Kies seitlich von der Strömung von der Rampe abgetragen wird. Es wurde bereits an anderer Stelle darauf hingewiesen, dass als Lockermaterial auch sogenannte Steinkammermatten Verwendung finden, mit denen der Rampenboden belegt ist. Die Bordwand 21 sorgt allerdings nicht nur für den Halt des Lockermaterials auf der Rampe 20, sondern beruhigt zudem die Strömung auf der Rampe. Zur Beruhigung der Strömung auf der Rampe sind darüber hinaus Borstengruppen 25 vorgesehen, die zudem für die Fische einen Strömungsschatten bilden, hinter dem sich die Fische ausruhen können.

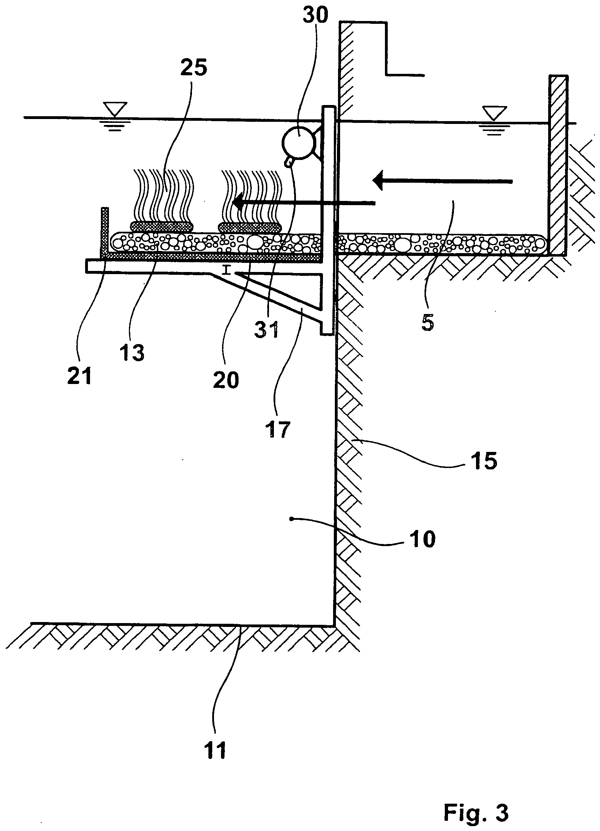

Im Bereich der Anbindung der Rampe an den Einstieg des Fischpasses ist insbesondere vorgesehen, wie sich das auch in Anschauung von Figur 3 ergibt, das Lockermaterial der Rampe bis in den Fischpass selbst hineinzuverlegen, sodass das Sohlsubstrat des Fischpasses zumindest im Einstieg dem Sohlsubstrat auf der Rampe entspricht.

Vom Übergang von der Sohle 11 des Auslaufgerinnes 10 zur Rampe, also am Auslauf 16 der Rampe, ist eine Leiteinrichtung 22 auf die Rampe 20 für die bodennahen Fische vorgesehen. Vorteilhaft ist das Lockermaterial auf der Rampe ähnlich ausgebildet wie das auf der Sohle des fließenden Gewässers (Pfeil 29), sodass für die Fische im Wesentlichen kein Unterschied zwischen dem Lockermaterial der Rampe und dem natürlichen Lockermaterial der Sohle des Flussbettes erkennbar ist.

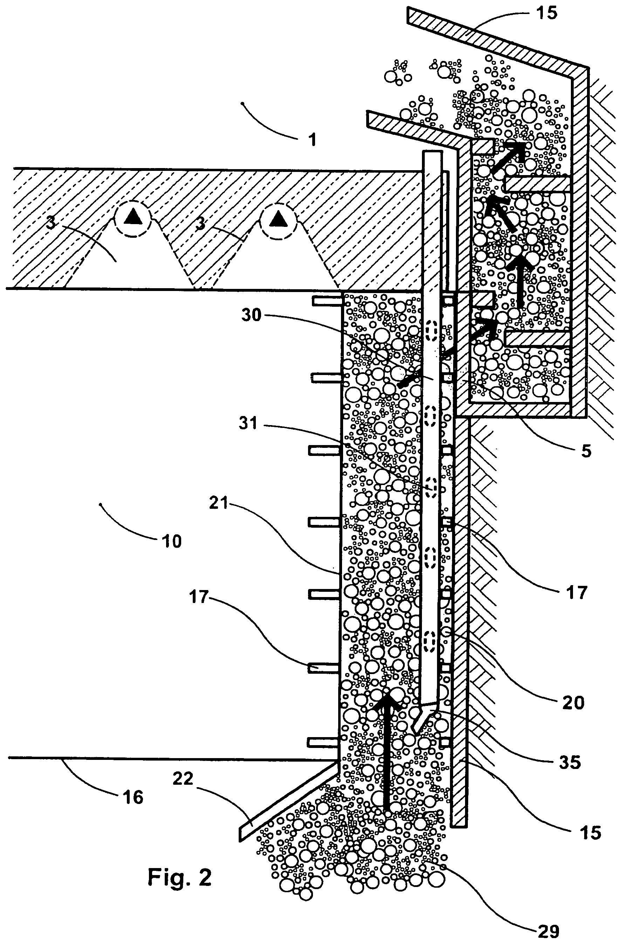

Aus Figur 2 ergibt sich der Einstieg für die schwimmstarken Fische im unmittelbaren Bereich der Staustufe seitlich über die Rampe in den Fischpasseinstieg. Die Bordwand 21 kann hierbei im Bereich des Übergangs zum Einstieg in den Fischpass ausgespart sein (nicht dargestellt).

Gegenstand der Erfindung ist ebenfalls die Anordnung eines Rohres unmittelbar über der Rampe 20, wobei das Rohr das Bezugszeichen 30 aufweist. Das Rohr weist auf seiner der Rampe zugewandten Seite mehrere hintereinander angeordnete Auslässe 31 auf, die in Richtung des schrägen Verlaufs der Rampe ausgerichtet sind. Am unteren Ende weist das Rohr 30 eine Düse 35 auf, wobei die Düse derart ausgerichtet ist, dass sie von der Wandung 15 wegweist. Die Speisung des Rohrs 30 mit Wasser erfolgt vom Oberwasser aus. Diese Strömung aus der Enddüse 35 soll die Fische auf die Seite und auf die Rampe locken.

### Bezugszeichenliste:

- 1: Staustufe
- 3: Saugschlauch
- 5: Fischpasseinstieg
- 10: Auslaufgerinne
- 11: Sohle des Auslaufgerinnes
- 13: Lockermaterial
- 15: Wandung (Spundwand)
- 16: Auslauf der Rampe zur Sohle
- 17: Konsole
- 20: Rampe
- 21: Bordwand der Rampe
- 22: Leiteinrichtung im Bereich der Sohle
- 25: Borstengruppe
- 29: Pfeil
- 30: Rohr über der Rampe
- 31: Auslass im Rohr
- 35: Enddüse

## Patentansprüche

1. Staustufe (1) in einem fließenden Gewässer, mit einem künstlichen Auslaufgerinne (10), **dadurch gekennzeichnet, dass** im Bereich des Auslaufgerinnes (10) in unmittelbarer Nähe zur Staustufe (1) ein Einstieg (5) eines Fischpasses vorgesehen ist,
dass der Einstieg des Fischpasses durch eine im Auslaufgerinne (10) unterhalb des Unterwasserspiegels angeordnete Rampe (20) mit der Sohle (11) des Auslaufgerinnes oder des Gewässers verbunden ist.

2. Staustufe (1) in einem fließenden Gewässer, mit einem künstlichen Auslaufgerinne (10) nach Anspruch 1,
**dadurch gekennzeichnet,**
**dass** die Rampe (20) an einer Wandung (15) des Auslaufgerinnes (10) angeordnet ist.

3. Staustufe (1) in einem fließenden Gewässer, mit einem künstlichen Auslaufgerinne (10) nach Anspruch 2,
**dadurch gekennzeichnet,**
**dass** zur Halterung der Rampe (20) an der Wandung (15) des Auslaufgerinnes (10) an der Wandung (15) Konsolen (17) vorgesehen sind, sodass eine Rampe frei auskragend an der Wandung angeordnet ist.

4. Staustufe (1) in einem fließenden Gewässer, mit einem künstlichen Auslaufgerinne (10) nach Anspruch 3,
**dadurch gekennzeichnet,**
**dass** die Rampe (20) einzelne Rampenelemente aufweist, die hintereinander auf den Konsolen (17) aufliegend die Rampe (20) bilden.

5. Staustufe (1) in einem fließenden Gewässer, mit einem künstlichen Auslaufgerinne (10) nach einem der voranstehenden Ansprüche,
**dadurch gekennzeichnet,**
**dass** die Rampe (20) zur Wasserseite hin eine Bordwand (21) aufweist.

6. Staustufe (1) in einem fließenden Gewässer, mit einem künstlichen Auslaufgerinne (10) nach einem der voranstehenden Ansprüche,
**dadurch gekennzeichnet,**
**dass** der Boden der Rampe (20) mit Lockermaterial (13) belegt ist.

7. Staustufe (1) in einem fließenden Gewässer, mit einem künstlichen Auslaufgerinne (10) nach Anspruch 6,
**dadurch gekennzeichnet,**
**dass** als Lockermaterial (13) der Rampenboden mit Steinkammermatten belegt ist.

8. Staustufe (1) in einem fließenden Gewässer, mit einem künstlichen Auslaufgerinne (10) nach einem der voranstehenden Ansprüche,
**dadurch gekennzeichnet,**
**dass** auf dem Boden der Rampe (20) Mittel vorgesehen sind, um Strömungsschatten zu erzeugen.

9. Staustufe (1) in einem fließenden Gewässer, mit einem künstlichen Auslaufgerinne (10) nach Anspruch 8,
**dadurch gekennzeichnet,**
**dass** die Mittel zur Erzeugung von Strömungsschatten auf dem Boden der Rampe (20) angeordnete Borstengruppen (25) sind.

10. Staustufe (1) in einem fließenden Gewässer, mit einem künstlichen Auslaufgerinne (10) nach einem der voranstehenden Ansprüche,
**dadurch gekennzeichnet,**
**dass** die Rampe (20) im Übergangsbereich (16) von einer künstlich hergestellten Sohle (11) zur natürlichen Sohle des fließenden Gewässers endet.

11. Staustufe (1) in einem fließenden Gewässer, mit einem künstlichen Auslaufgerinne (10) nach einem der voranstehenden Ansprüche,
**dadurch gekennzeichnet,**
**dass** im Bereich der Rampe (20) Mittel zur Erzeugung einer Leitströmung vorgesehen sind.

12. Staustufe (1) in einem fließenden Gewässer, mit einem künstlichen Auslaufgerinne (10) nach Anspruch 11,
**dadurch gekennzeichnet,**
**dass** das Mittel zur Erzeugung der Leitströmung ein Rohr (30) umfasst, das mehrere Auslässe (31) für das in dem Rohr (30) geführte Wasser aufweist.

13. Staustufe (1) in einem fließenden Gewässer, mit einem künstlichen Auslaufgerinne (10) nach Anspruch 12,
**dadurch gekennzeichnet,**
**dass** das Rohr (30) über der Rampe (20) angeordnet ist, wobei die Auslässe (31) über der Rampe (20) in dem Rohr (30) angeordnet sind.

14. Staustufe (1) in einem fließenden Gewässer, mit einem künstlichen Auslaufgerinne (10) nach Anspruch 13,
**dadurch gekennzeichnet,**
**dass** die Auslässe (31) im Rohr (30) in Längsrichtung der Rampe nach Unterstrom ausgerichtet sind.

15. Staustufe (1) in einem fließenden Gewässer, mit einem künstlichen Auslaufgerinne (10) nach einem der Ansprüche 12 bis 14,
**dadurch gekennzeichnet,**
**dass** das Rohr (30) am unteren Ende Mittel zur Erzeugung eines Lockstrahls aufweist.

16. Staustufe (1) in einem fließenden Gewässer, mit einem künstlichen Auslaufgerinne (10) nach Anspruch 15,
**dadurch gekennzeichnet,**
**dass** das Rohr (30) am unteren Ende eine Düse (35) aufweist, die entweder parallel zur Wandung (15) verläuft oder von der Wandung (15) weggerichtet ist.

## Claims

1. A weir (1) in a flowing body of water with an artificial discharge channel (10),
**characterized in that**
an entrance (5) of a fish passage is provided in the area of the discharge channel (10) in the immediate vicinity of the weir (1), the entrance of the fish passage being connected to the bed (11) of the discharge channel or of the body of water by a ramp (20) disposed in the discharge channel (10) below the tailwater level.

2. The weir (1) in a flowing body of water with an artificial discharge channel (10) according to claim 1,
**characterized in that**
the ramp (20) is disposed on a wall (15) of the discharge channel (10).

3. The weir (1) in a flowing body of water with an artificial discharge channel (10) according to claim 2,
**characterized in that**
mounting brackets (17) are provided at the wall (15) of the discharge channel (10) for holding the ramp (20) at the wall (15), so that a ramp is disposed at the wall in a freely overhanging manner.

4. The weir (1) in a flowing body of water with an artificial discharge channel (10) according to claim 3,
**characterized in that**
the ramp (20) comprises individual ramp elements, which rest in a row on the mounting brackets (17) thus forming the ramp (20).

5. The weir (1) in a flowing body of water with an artificial discharge channel (10) according to one of the afore-mentioned claims,
**characterized in that**
the ramp (20) comprises a board wall (21) toward the water side.

6. The weir (1) in a flowing body of water with an artificial discharge channel (10) according to one of the afore-mentioned claims
**characterized in that**
the floor of the ramp (20) is lined with loose material (13).

7. The weir (1) in a flowing body of water with an artificial discharge channel (10) according to claim 6,
**characterized in that**
the ramp floor is lined with stone mattresses as a loose material (13).

8. The weir (1) in a flowing body of water with an artificial discharge channel (10) according to one of the afore-mentioned claims,
**characterized in that**
means for generating areas that are protected from the current flow shadow areas are provided on the floor of the ramp (20).

9. The weir (1) in a flowing body of water with an artificial discharge channel (10) according to claim 8,
**characterized in that**
the means for generating flow shadow areas are groups of bristles (25) disposed on the floor of the ramp (20).

10. The weir (1) in a flowing body of water with an artificial discharge channel (10) according to one of the afore-mentioned claims,
**characterized in that**
the ramp (20) ends in the transition area (16) between an artificially manufactured bed (11) and the natural bed of the flowing body of water.

11. The weir (1) in a flowing body of water with an artificial discharge channel (10) according to one of the afore-mentioned claims,
**characterized in that**
means for generating a guide flow are provided in the area of the ramp (20).

12. The weir (1) in a flowing body of water with an artificial discharge channel (10) according to claim 11,
**characterized in that**
the means for generating the guide flow comprises a tube (30) that has several outlets (31) for the water guided in the tube (30).

13. The weir (1) in a flowing body of water with an artificial discharge channel (10) according to claim 12,
**characterized in that**
the tube (30) is disposed above the ramp (20), wherein the outlets (31) are disposed above the ramp (20) in the tube (30).

14. The weir (1) in a flowing body of water with an artificial discharge channel (10) according to claim 13,
**characterized in that**
the outlets (31) in the tube (30) are oriented downstream in the longitudinal direction of the ramp.

15. The weir (1) in a flowing body of water with an artificial discharge channel (10) according to one of the claims 12 to 14,
**characterized in that**
at its bottom end, the tube (30) comprises means for generating an attraction stream.

16. The weir (1) in a flowing body of water with an artificial discharge channel (10) according to claim 15,
**characterized in that**
at its bottom end, the tube (30) comprises a nozzle (35), which runs either parallel to the wall (15) or is oriented away from the wall (15).

## Revendications

1. Barrage (1) dans un cours d'eau avec une rigole d'écoulement artificielle (10),
**caractérisé en ce que**
une entrée (5) d'une passe à poissons est prévue dans la région de la rigole d'écoulement (10) à proximité immédiate du barrage (1), l'entrée de la passe à poissons étant reliée avec le lit (11) de la rigole d'écoulement ou de l'eau courante par une rampe (20) disposée sous le niveau aval dans la rigole d'écoulement (10).

2. Barrage (1) dans un cours d'eau avec une rigole d'écoulement artificielle (10) selon la revendication 1,
**caractérisé en ce que**
la rampe (20) est disposée au niveau d'une paroi (15) de la rigole d'écoulement (10).

3. Barrage (1) dans un cours d'eau avec une rigole d'écoulement artificielle (10) selon la revendication 2,
**caractérisé en ce que**
des supports de montage (17) sont prévus au niveau de la paroi (15) de la rigole d'écoulement (10) pour maintenir la rampe (20) au niveau de la paroi (15), de sorte qu'une rampe est disposée de manière librement saillante au niveau de la paroi.

4. Barrage (1) dans un cours d'eau avec une rigole d'écoulement artificielle (10) selon la revendication 3,
**caractérisé en ce que**
la rampe (20) comprend des éléments de rampe individuels qui reposent les uns derrière les autres sur les supports de montage (17), formant ainsi la rampe (20).

5. Barrage (1) dans un cours d'eau avec une rigole d'écoulement artificielle (10) selon l'une des revendications précédentes,
**caractérisé en ce que**
la rampe (20) comporte une paroi latérale (21) côté eau.

6. Barrage (1) dans un cours d'eau avec une rigole d'écoulement artificielle (10) selon l'une des revendications précédentes,
**caractérisé en ce que**
le sol de la rampe (20) est revêtu d'un matériau meuble (13).

7. Barrage (1) dans un cours d'eau avec une rigole d'écoulement artificielle (10) selon la revendication 6,
**caractérisé en ce que**
le sol de la rampe est revêtu de matelas de pierre en tant que matériau meuble (13).

8. Barrage (1) dans un cours d'eau avec une rigole d'écoulement artificielle (10) selon l'une des revendications précédentes,
**caractérisé en ce que**
des moyens pour générer des zones protégées du courant sont prévus au niveau du sol de la rampe (20).

9. Barrage (1) dans un cours d'eau avec une rigole d'écoulement artificielle (10) selon la revendication 8,
**caractérisé en ce que**
les moyens pour générer des zones protégées du courant sont des groupes de poils (25) disposés sur le sol de la rampe (20).

10. Barrage (1) dans un cours d'eau avec une rigole d'écoulement artificielle (10) selon l'une des revendications précédentes,
**caractérisé en ce que**
la rampe (20) se termine dans la zone de transition (16) entre un lit (11) artificiellement produit et le lit naturel du cours d'eau.

11. Barrage (1) dans un cours d'eau avec une rigole d'écoulement artificielle (10) selon l'une des revendications précédentes,
**caractérisé en ce que**
des moyens pour générer un courant de guidage sont prévus dans la région de la rampe (20).

12. Barrage (1) dans un cours d'eau avec une rigole d'écoulement artificielle (10) selon la revendication 11,
**caractérisé en ce que**
le moyen pour générer un courant de guidage comprend un tuyau (30) qui comporte plusieurs sorties (31) pour l'eau guidée dans le tuyau (30).

13. Barrage (1) dans un cours d'eau avec une rigole d'écoulement artificielle (10) selon la revendication 12,
**caractérisé en ce que**
le tuyau (30) est disposé au-dessus de la rampe (20), où les sorties (31) sont disposées au-dessus de la rampe (20) dans le tuyau (30).

14. Barrage (1) dans un cours d'eau avec une rigole d'écoulement artificielle (10) selon la revendication 13,
**caractérisé en ce que**
les sorties (31) dans le tuyau (30) sont orientées vers l'aval dans la direction longitudinale de la rampe.

15. Barrage (1) dans un cours d'eau avec une rigole d'écoulement artificielle (10) selon l'une des revendications 12 à 14,
**caractérisé en ce que**
à son extrémité inférieure, le tuyau (30) comporte des moyens pour générer un jet d'attraction.

16. Barrage (1) dans un cours d'eau avec une rigole d'écoulement artificielle (10) selon la revendication 15,
**caractérisé en ce que**
le tuyau (30) comporte une buse (25) à son extrémité inférieure qui s'étend soit parallèlement à la paroi (15) ou s'écarte de la paroi (15).
